# EUROPEAN PATENT SPECIFICATION

(11) **EP 1 802 520 B1**
(45) Date of publication and mention of the grant of the patent: **03.12.2008**
(21) Application number: 05787223.6
(22) Date of filing: 23.09.2005
(51) Int. Cl.: B62M 23/02

(54) **DRIVING DEVICE**
ANTRIEBSVORRICHTUNG
DISPOSITIF D' ENTRAINEMENT

(30) Priority: 23.09.2004 NL 1027092
(43) Date of publication of application: 04.07.2007
(73) Proprietor: E-Traction Europe B.V., 7324 AL Apeldoorn (NL)
(72) Inventor: HEINEN, Adrianus, Johannes, NL-7315 HW Apeldoorn (NL)
(74) Representative: van Westenbrugge, Andries
(86) International application number: PCT/NL2005/000692
(87) International publication number: WO 2006/049491

(56) References cited:
- WO-A-01/42079
- WO-A-96/25320
- WO-A-20/04078508
- CA-A1- 2 347 281
- US-A- 3 884 317
- US-A- 4 062 421
- US-A- 4 095 663
- US-A- 5 788 007
- US-A- 5 894 902

## Description

The invention relates to a driving device, particularly an electric driving device.

In the art very many driving devices are known, for instance driving devices that directly drive a wheel. One of the best known is an electric. drive wherein an electromotor is disposed in a wheel. An example of such a drive is PCT/NLO1/00056 or US 5788007. With such a wheel it is possible to build highly compact vehicles. Due to the nature of the wheel provided with an electromotor, however, it is impossible with this arrangement to provide all possibly existing vehicles with an electric drive.

It is an object of the invention to provide an alternative drive with which among others vehicles that may or may not exist can be driven.

To that end the invention provides a driving device comprising a ring rotable about its rotational axis of symmetry which ring at its inside circumference is provided with magnets, the ring forming a wheel that is connected to a wheel shaft, and first electromagnet means positioned near the ring which are concentric to the ring and form an incomplete circle part, for enabling to exert a substantially tangential driving power on the ring, wherein the electromagnet means and the magnets are spaced apart for forming an air slit in between them, wherein the magnets and the first magnet means are positioned one to the other such that the air slit is at the inside of the ring oriented to the rotational axis of symmetry.

The arrangement of the magnets and first electromagnets is such that the driving power is tangentially oriented to ring as much as possible. The drive according to the invention can be used in all possibly existing vehicles, such as for instance bikes, motorbikes and even tractors. In addition, said electric drive is capable of realising a very high drive ratio, that means a ratio between the arm of the power providing the drive divided by the radius (half the outer diameter) of a ring to be driven.

The advantages of such a large drive ratio are specific to an electromotor for driving a wheel described in PCT/NL2004/000170.

Such a drive is furthermore easy to arrange in existing vehicles.

In one embodiment of the driving device according to the invention the magnets are attached at an inside of the ring. In this way the magnets are easy to attach.

In another or further embodiment the first electromagnet means are positioned within the ring. This allows a compact build, and the distance between the magnets and electromagnets can be minimal.

In another or further embodiment the incomplete circle part extends over 270 degrees at the most. In this way space between the road surface and the electromagnets is created.

In another or further embodiment the incomplete circle part extends over 180 degrees at the most. In this way uses are possible wherein the road conditions may form a heavy burden.

In another or further embodiment the incomplete circle part extends over 90 degrees at the most. Building in into existing vehicles, particularly two-wheelers such as bikes and motorbikes, or tricycles, is easy.

In another or further embodiment the incomplete circle part extends over at least 10 degrees. In this way it is possible to generate sufficient power for instance for driving a bike independently, and yet keeping the drive limited as regards weight. In addition only minimal adjustments in the construction are necessary.

In another or further embodiment the first electromagnet means are connected to a frame for rotatably supporting the ring. In this way the electromagnets are easy to position stationary with respect to for instance a vehicle.

In an embodiment of the driving device according to the invention the magnets are permanent magnets.

In an embodiment of the driving device according to the invention the permanent magnets have a north pole and a south pole and a magnetic axis through the poles, and the permanent magnets are attached at the inside of the ring with the magnetic axis substantially in the circumferential direction of the ring.

In an embodiment thereof, the permanent magnets have a north pole and a south pole and a magnetic axis through the poles, and the permanent magnets are attached at the inside of the ring with the magnetic axis substantially transverse to the circumferential direction of the ring.

In an embodiment the permanent magnets are positioned with a south pole each time facing a north pole.

In an embodiment of the driving device according to the invention the magnets are second electromagnets that can be switched on.

In an embodiment thereof the second electromagnets comprise coils having a coil axis, wherein the second electromagnets are positioned with their coil axis substantially in the radial direction of the ring.

In an embodiment of the driving device according to the invention the first electromagnet means comprise at least one coil having windings and having a coil axis around which the windings have been disposed.

In an embodiment thereof the first electromagnet means are positioned with the coil axis substantially radial with respect to the ring.

In an embodiment the first electromagnet means are positioned with the coil axis substantially within the ring.

In an embodiment the first electromagnet means comprise several coils, positioned in circulation direction of the ring.

In an embodiment thereof the coils are positioned adjacent to each other.

The arrangement of the magnets and/or the first electromagnets makes it possible that for instance in case of a buckled wheel the air slit between the magnets and the first electromagnets is largely maintained.

Particularly the combination of arrangement of the first electromagnets with the coil axis in radial direction of the ring and with the electromagnets within the ring result in the air slit being less sensitive to deviations in the ring, such as (in case of a bike or motorbike) a buckled wheel when the ring is attached to the rim or forms (part of) the rim. In the state of the art wherein electromagnets are positioned outside of the rim and the air slit is positioned at the side of the ring, deviations in the air slit may easily arise. The air slit is of great importance to the operation of the drive.

The invention further relates to a vehicle comprising a driving device as described above, wherein the ring forms a wheel that is connected to a wheel shaft and the permanent magnets at the inside of the wheel are connected thereto, and the electromagnet means are connected to the vehicle. In this way the drive can easily be integrated into a vehicle.

In an embodiment of such a vehicle it is provided with alternating magnetic poles along the circumferential direction of the wheel. In a further embodiment the magnetic poles are regularly distributed along the rim circumference.

In an embodiment the electromagnet means extend along 25% of the rim circumference at the most.

In an embodiment the magnetic poles of the at least one electromagnet extend from outside of the wheel towards the magnets.

In an embodiment the vehicle comprises a holder connected to the vehicle and provided with the at least one electromagnet.

In an embodiment the holder is provided with an arm.

In an embodiment thereof the arm extends to within the wheel circumference, and preferably at its end it is provided with the electromagnet means.

In an embodiment the holder axially at least partially engages about the wheel. When a free passage opening is present for instance the wheel can be taken off from the vehicle.

The invention furthermore relates to a vehicle comprising at least one wheel having a wheel shaft and a rim concentrically connected thereto, and permanent magnets at the inside of the rim having alternating magnetic poles along the circumferential direction of the wheel, and electromagnet means that are stationary connected to the vehicle, which electromagnet means extend along half the rim circumference at the most.

Alternatively the invention relates to a drive assembly for a vehicle, preferably a two-wheeler such as a bike or motorbike, comprising a wheel provided with a rim, rotatably connected to a shaft, and at the inside oriented to the shaft provided with permanent magnets having alternating magnetic poles along the circumferential direction, and having electromagnet means connectable to the vehicle for, once activated, exerting a torque on the permanent magnets, wherein the electromagnet means extend along a part of the rim circumference, preferably over at least 10 degrees and 270 degrees at the most, preferably 180 degrees at the most, preferably 90 degrees at the most.

In an embodiment thereof the electromagnet means comprise one or more coils having windings about a coil axis or coil axes, wherein the electromagnet means are positioned with the coils axes substantially in radial direction of the rim.

In an embodiment thereof the electromagnets are positioned with the coil axes within the rim.

In an embodiment of the drive assembly the shaft is connected to a wheel strut or fork so as to be rotatable about its axis of rotation, wherein the magnet means are connected to the wheel strut or fork.

In an embodiment said wheel strut or fork is provided with rotation means for rotatably connecting the wheel strut or fork to a vehicle, wherein the magnet means are connected between the axis and the rotation means.

In a further embodiment the wheel strut or fork is provided with spring means for springily connecting the wheel strut or fork to a vehicle, wherein the magnet means are connected between the axis and the spring means.

Due to the location of the air slit it is less susceptible to change as a result of which the operation of the driving device improves.

The invention will be elucidated on the basis of a number of exemplary embodiments shown in the attached drawings, in which:
Figure 1 shows a side view of an application of the drive according to the invention for driving the bike wheel;
Figure 2 shows a front view in cross-section of figure 1;
Figure 3 shows a detail of figure 2; and
Figure 4 shows a wheel with mono suspension.

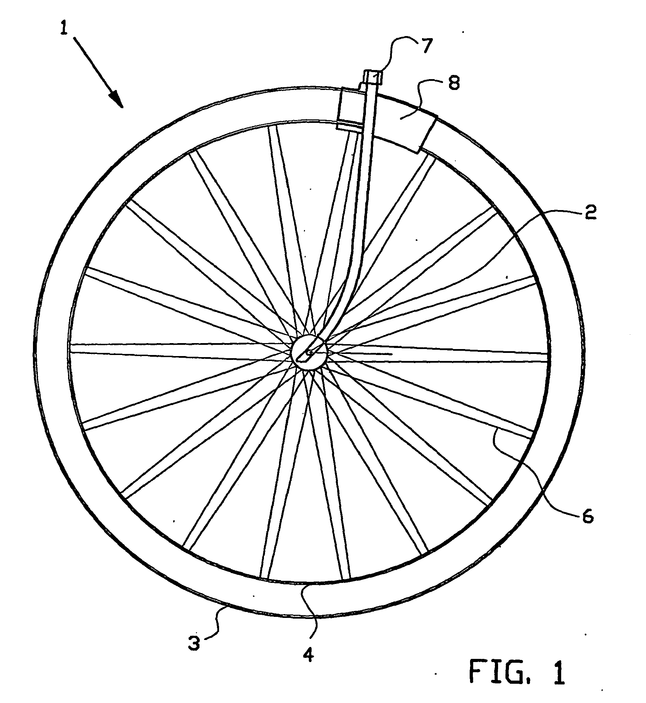

Figure 1 shows an embodiment of the electric drive according to the invention, used for driving a bike wheel. The side view of figure 1 shows a bike wheel 1 provided with a shaft 2 to which by means of spokes 6 a rim 4 is attached on which a tyre with tread 3 has been provided. At the inside of the rim 4 permanent magnets 5 are attached, in this case glued together with rim 4. In an alternative embodiment the rim 4 can be made of for instance fibre-reinforces synthetic material in which the magnets are incorporated in the synthetic material.

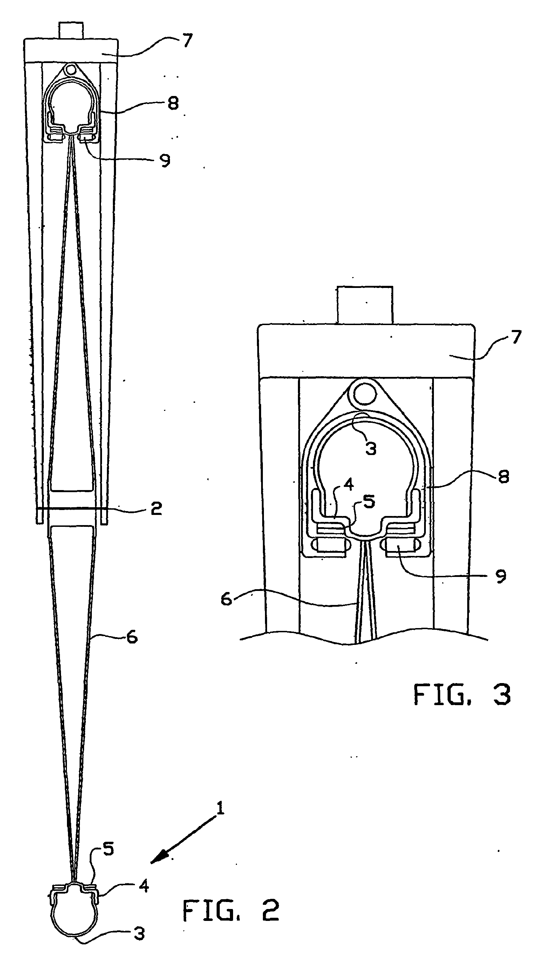

A holder 8 is attached to the frame 7 in which the wheel is attached. The holder 8 engages beyond about the wheel and is provided with ends which extend at the inside of the rim, the side which is provided with permanent magnets. In figures 2 and 3 this is further clarified.

Figure 2 shows a cross-section of the wheel of figure 1 in front view.

The ends of the holder 8 are provided with electromagnets 9. The permanent magnets 5 are mounted at the inside of the rim such that north poles and south poles alternate in circumferential direction of the rim. In addition the electromagnets 9 are alternately mounted. The rim 4 is in this case symmetric having spokes 6 in the middle and rows of permanent magnets 5 on both sides of the spokes 6, that means on both sides of the plane of symmetry of the wheel. In this embodiment electromagnet means extend from both axial sides to the permanent magnets by means of holder 8 which extends about the wheel.

The drive shown in these figures has a very large drive ratio, that means the ratio between the arm of the moment that the electromagnets exert jointly with the magnet and the radius of the wheel. This results in a drive having a very high drive ratio. Said ratio may for this arrangement increase up to 0.8-0.9. In International patent application PCT/NL2004/000170 the advantageous effect such a high ratio results in is described. Particularly in case of cycles, the drive as shown will have great advantages, but also in case of other means of transport very large advantages will arise such as for instance in case of vehicles requiring a very large torque, such as for instance tractors and the like.

Figure 3 shows a detail of the attachment 8 for the electromagnets 9. It can clearly be seen here how the holder 8 for the permanent magnets is attached to frame 7 and is provided with ends which extend up to the inside of the rim and which are provided with electromagnets. It will be clear that the arrangement shown, in this case for cycles, can easily be made suitable for other vehicles, such as for instance tractors, motorbikes and even for newly to be designed vehicles for for instance urban traffic or commuting. The electromagnets here have coils having windings and coil axes. The coil axes in that case are radial to the rim, meaning almost parallel to the spokes 6. Moreover the coil axes are situated within the rim. Due to this arrangement the air slit is situated between electromagnets 9 and magnets 5 at the inside of the rim, which is less sensitive to deformations in the rim, as deformations usually occur axially.

The electromagnets are furthermore preferably provided with electric power by means of a circuit and control as also described in WO-A1-01/54939, which document is fully incorporated in this application. The holder may for that purpose be provided with means for measuring the strength of the magnetic field, and with adjustment means for adjusting the phases of the electromagnets, and control means connected to the measuring means and adjustment means for determining the optimal phase setting from the measuring data from the measuring means and to have the adjustment means provide said phase setting.

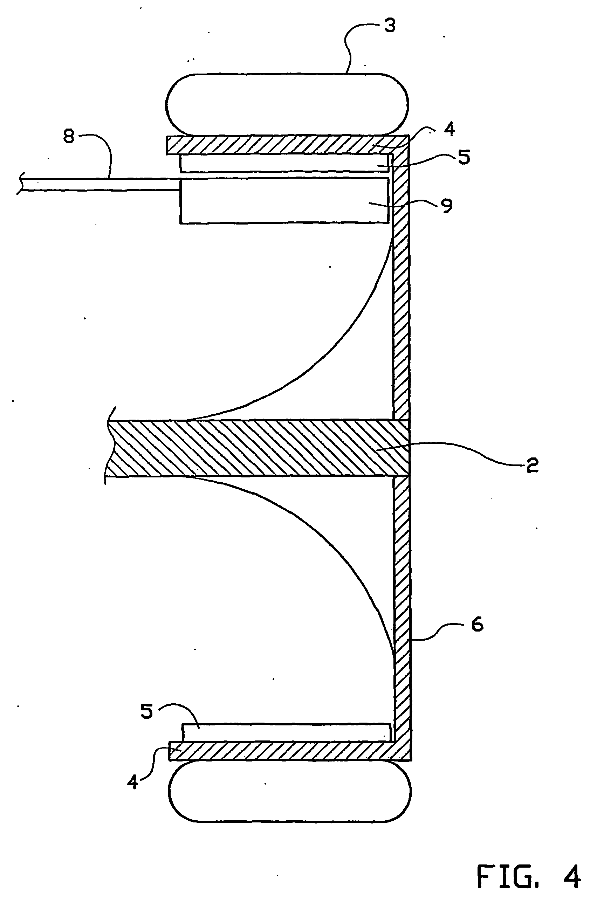

In an alternative embodiment, shown in figure 4, the wheel contrary to the preceding embodiments is adapted for one-sided suspension. By means of said suspension at one side, known per se from among others motorbikes, the wheel can easily be taken off for maintenance or repairs. The rim is in that case preferably made of fibre-reinforced synthetic material with the permanent magnets incorporated therein, preferably protected by synthetic material.

Instead of the one attachment with electromagnets a driving device according to the invention may also be provided with two or more electromagnet means that each form an incomplete circle part, and are spaced apart along the circumference of the rim.

In a further embodiment a vehicle according to the invention is equipped with a generator set. In an embodiment thereof said generator set is provided with driving means drivable through human muscular strength, such as a pedal assembly.

In an embodiment thereof an electromotor is provided with pedals. Preferably the generator is connected to energy storage means, such as one of more batteries, that are further connected to the driving device according to the invention. An example of the interconnection of generator set, driving device and batteries is described in applicant's earlier Dutch Patent application, filed on 25 August 2004, to which reference is made here as if said text were fully incorporated in the present patent application.

As a result for instance a chainless transmission for a bike can be realised, or a driver (or even several occupants of a vehicle) may at least contribute to the power necessary for driving the vehicle. As a result it is for instance possible to adjust the effort required.

It will be clear that the above description is included to illustrate the operation of preferred embodiments of the invention and not to limit the scope of the invention. Starting from the above explanation many variations that fall under scope of the present invention will be evident to an expert.

## Claims

1. Drive device comprising a ring (4) rotatable about its rotational axis of symmetry (2) which ring at its inside circumference is provided with magnets (5), the ring forming a wheel that is connected to a wheel shaft, and first electromagnet means (8, 9) positioned near the ring which are concentric to the ring and form an incomplete circle part, for enabling to exert a substantially tangential driving power on the ring, wherein the electromagnet means and the magnets are spaced apart for forming an air slit in between them, **characterized in that** the magnets and the first magnet means are positioned one to the other such that the air slit is at the inside of the ring oriented to the rotational axis of symmetry.

2. Driving device according to claim 1, wherein the magnets are attached at an inside of the ring.

3. Driving device according to claim 1 or 2, wherein the first electromagnet means are positioned within the ring.

4. Driving device according to any one of the preceding claims, wherein the incomplete circle part extends over 270 degrees at the most, in particular. the incomplete circle part extends over 180 degrees at the most, in particular the incomplete circle part extends over 90 degrees at the most, in particular the incomplete circle part extends over at least 10 degrees.

5. Driving device according to any one of the preceding claims, wherein the first electromagnet means are connected to a frame (7) for rotatably supporting the ring.

6. Driving device according to any one of the preceding claims, wherein the magnets are permanent magnets (5).

7. Driving device according to claim 6, wherein the permanent magnets have a north pole and a south pole and a magnetic axis through the poles, and the permanent magnets are attached at the inside of the ring (4) width the magnetic axis substantially in the circumferential direction of the ring.

8. Driving device according to claim 6, wherein the permanent magnets have a north pole and a south pole and a magnetic axis through the poles, and the permanent magnets are attached at the inside of the ring with the magnetic axis substantially transverse to the circumferential direction of the ring.

9. Driving device according to claim 7 or 8, wherein the permanent magnets are positioned with a south pole each time facing a north pole.

10. Driving device according to any one of the preceding claims 1-5, wherein the magnets are second electromagnets that can be switched on.

11. Driving device according to claim 10, wherein the second electromagnets comprise coils having a coil axis, wherein the second electromagnets are positioned with their coil axis substantially in the radial direction of the ring.

12. Driving device according to any one of the preceding claims, wherein the first electromagnet means comprise at least one coil having windings and having a coil axis around which the windings have been disposed.

13. Driving device according to claim 12, wherein the first electromagnet means are positioned with the coil axis substantially radial with respect to the ring.

14. Driving device according to claim 13, wherein the first electromagnet means are positioned with the coil axis substantially within the ring.

15. Driving means according to claim 11-13, wherein the first electromagnet means comprise several coils, positioned in circulation direction of the ring.

16. Driving device according to claim 15, wherein the coils are positioned adjacent to each other.

17. Driving device according to claim 11-15, wherein the first electromagnet means comprise a first and second set of coils, and the ring has a notional radial plane perpendicular to the axis of rotation of the ring which divides the ring into two halves, wherein the first set is positioned at the one side of the radial plane and the second set is positioned at the other side of the radial plane.

18. Vehicle comprising a driving device according to any one of the preceding claims, provided with a wheel comprising a ring that is connected to a wheel shaft and to the permanent magnets at the inside of the wheel, and wherein the electromagnet means are connected to the vehicle.

## Patentansprüche

1. Antriebsvorrichtung, umfassend einen Ring (4), der um seine Rotationssymmetrieachse (2) herum drehbar ist, wobei dieser Ring an seinem Innenumfang mit Magneten (5) versehen ist, wobei der Ring ein Rad formt, das mit einer Radachse verbunden ist, und bei dem Ring angeordnete erste elektromagnetische Mittel (8, 9), die konzentrisch zum Ring sind und einen offenen Kreisabschnitt formen, um die Ausübung einer im Wesentlichen tangentialen Antriebskraft auf den Ring zu erlauben, wobei die elektromagnetischen Mittel und die Magnete voneinander beabstandet sind, um einen Luftspalt dazwischen zu formen, **dadurch gekennzeichnet, dass** die Magnete und die ersten elektromagnetischen Mittel relativ zueinander so angeordnet sind, dass der Luftspalt auf der Innenseite des Rings zur Rotationssymmetrieachse orientiert ist.

2. Antriebsvorrichtung nach Anspruch 1, wobei die Magnete auf einer Innenseite des Rings angebracht sind.

3. Antriebsvorrichtung nach Anspruch 1 oder 2, wobei die ersten elektromagnetischen Mittel innerhalb des Rings angeordnet sind.

4. Antriebsvorrichtung nach einem der vorherigen Ansprüche, wobei der offene Kreisabschnitt sich über höchstens 270 Grad erstreckt, der offene Kreisabschnitt sich insbesondere über höchstens 180 Grad erstreckt, der offene Kreisabschnitt sich insbesondere über höchstens 90 Grad erstreckt, der offene Kreisabschnitt sich insbesondere über mindestens 10 Grad erstreckt.

5. Antriebsvorrichtung nach einem der vorherigen Ansprüche, wobei die ersten elektromagnetischen Mittel mit einem Rahmen (3) zum drehbaren Tragen des Rings verbunden sind.

6. Antriebsvorrichtung nach einem der vorherigen Ansprüche, wobei die Magnete Dauermagnete (5) sind.

7. Antriebsvorrichtung nach Anspruch 6, wobei die Dauermagnete einen Nordpol und einen Südpol und eine Magnetachse durch die Pole aufweisen, und die Dauermagnete auf der Innenseite des Rings (4) angebracht sind, mit der Magnetachse im Wesentlichen in der Umfangsrichtung des Rings.

8. Antriebsvorrichtung nach Anspruch 6, wobei die Dauermagnete einen Nordpol und einen Südpol und eine Magnetachse durch die Pole aufweisen, und die Dauermagnete auf der Innenseite des Rings (4) angebracht sind, mit der Magnetachse im Wesentlichen quer zur Umfangsrichtung des Rings.

9. Antriebsvorrichtung nach Anspruch 7 oder 8, wobei die Dauermagneten mit einem Südpol angeordnet sind, der jedes Mal einem Nordpol gegenüberliegt.

10. Antriebsvorrichtung nach einem der vorherigen Ansprüche 1-5, wobei die Magnete zweite Elektromagnete sind, die eingeschaltet werden können.

11. Antriebsvorrichtung nach Anspruch 10, wobei die zweiten Elektromagnete Spulen mit einer Spulenachse umfassen, wobei die zweiten Elektromagnete mit ihrer Spulenachse im Wesentlichen in der Radialrichtung des Rings angeordnet worden sind.

12. Antriebsvorrichtung nach einem der vorherigen Ansprüche, wobei die ersten elektromagnetischen Mittel mindestens eine Spule mit Wicklungen und mit einer Spulenachse umfassen, um welche herum die Wicklungen angeordnet wurden.

13. Antriebsvorrichtung nach Anspruch 12, wobei die ersten elektromagnetischen Mittel mit der Spulenachse im Wesentlichen radial zum Ring angeordnet sind.

14. Antriebsvorrichtung nach Anspruch 13, wobei die ersten elektromagnetischen Mittel mit der Spulenachse im Wesentlichen innerhalb des Rings angeordnet sind.

15. Antriebsvorrichtung nach einem der Ansprüche 11-13, wobei die ersten elektromagnetischen Mittel mehrere Spulen umfassen, die in der Umlaufrichtung des Rings angeordnet sind.

16. Antriebsvorrichtung nach Anspruch 15, wobei die Spulen benachbart zueinander angeordnet sind.

17. Antriebsvorrichtung nach einem der Ansprüche 11-15, wobei die ersten elektromagnetischen Mittel erste und zweite Spulensätze umfassen und der Ring eine Rotationsradialebene rechtwinklig zur Drehachse des Rings aufweist, die den Ring in zwei Hälften unterteilt, wobei der erste Satz auf der einen Seite der Radialebene liegt und der zweite Satz auf der anderen Seite der Radialebene liegt.

18. Fahrzeug, umfassend eine Antriebsvorrichtung nach einem der vorherigen Ansprüche, versehen mit einem Rad, das einen Ring aufweist, der mit einer Radachse und den Dauermagneten auf der Innenseite des Rads verbunden ist, und wobei die elektromagnetischen Mittel mit dem Fahrzeug verbunden sind.

## Revendications

1. Dispositif d'entraînement comprenant un anneau (4) monté tournant autour de son axe de rotation de symétrie (2), ledit anneau étant pourvu d'aimants (5) au niveau de sa circonférence intérieure, l'anneau formant une roue reliée à un axe de roue, et des premiers moyens électromagnétiques (8, 9) placés à proximité de l'anneau, concentriques par rapport celui-ci et formant une partie de cercle incomplet, pour permettre d'exercer sur l'anneau une force d'entraînement sensiblement tangentielle, dispositif dans lequel les moyens électromagnétiques et les aimants sont distants les uns des autres pour former entre eux un rideau d'air, **caractérisé en ce que** les aimants et les premiers moyens magnétiques sont placés côte à côte de sorte que le rideau d'air se trouve à l'intérieur de l'anneau orienté selon l'axe de rotation de symétrie.

2. Dispositif d'entraînement selon la revendication 1, dans lequel les aimants sont fixés à l'intérieur de l'anneau.

3. Dispositif d'entraînement selon la revendication 1 ou 2, dans lequel les premiers moyens électromagnétiques sont placés au sein de l'anneau.

4. Dispositif d'entraînement selon l'une quelconque des revendications précédentes, dans lequel le partie de cercle incomplet s'étire sur 270 degrés au plus, en particulier la partie de cercle incomplet s'étire sur 180 degrés au plus, en particulier la partie de cercle incomplet s'étire sur 90 degrés au plus, en particulier la partie de cercle incomplet s'étire sur au moins 10 degrés.

5. Dispositif d'entrainement selon l'une quelconque des revendications précédentes, dans lequel les premiers moyens électromagnétiques sont reliés à un châssis (7) destiné à soutenir l'anneau en rotation.

6. Dispositif d'entraînement selon l'une quelconque des revendications précédentes, dans lequel les aimants sont des aimants permanents (5).

7. Dispositif d'entraînement selon la revendication 6, dans lequel les aimants permanents ont un pôle Nord, un pôle Sud et un axe magnétique passant les pôles, et dans lequel les aimants permanents sont fixés à l'intérieur de l'anneau (4), l'axe magnétique étant sensiblement dans le sens de la circonférence de l'anneau.

8. Dispositif d'entraînement selon la revendication 6, dans lequel les aimants permanents ont un pôle Nord, un pôle Sud et un axe magnétique passant les pôles, et dans lequel les aimants permanents sont fixés à l'intérieur de l'anneau, l'axe magnétique étant sensiblement transversal au sens de la circonférence de l'anneau.

9. Dispositif selon la revendication 7 ou 8, dans lequel les aimants permanents sont placés de telle sorte qu'un pôle Sud soit toujours en vis-à-vis d'un pôle Nord.

10. Dispositif d'entraînement selon l'une quelconque des revendications précédentes 1 à 5, dans lequel les aimants sont les seconds électroaimants qui peuvent être activés électriquement.

11. Dispositif d'entraînement selon la revendication 10, dans lequel les seconds électroaimants comportent des bobines ayant un axe de bobine et sont placés de telle sorte que leur axe de bobine soit sensiblement dans le sens radial de l'anneau.

12. Dispositif d'entrainement selon l'une quelconque des revendications précédentes, dans lequel les premiers moyens électromagnétiques comprennent au moins une bobine ayant des enroulement, et un axe de bobine autour duquel sont disposés les enroulements.

13. Dispositif d'entraînement selon la revendication 12, dans lequel les premiers moyens électromagnétiques sont placé s de telle sorte que l'axe de bobine soit sensiblement radial par rapport à l'anneau.

14. Dispositif d'entraînement selon la revendication 13, dans lequel les premiers moyens électromagnétiques sont placés de telle sorte que l'axe de bobine soit sensiblement au sein de l'anneau.

15. Dispositif d'entraînement selon les revendications 11 à 13, dans lequel les premiers moyens électromagnétiques comprennent plusieurs bobines placées dans le sens de circulation de l'anneau.

16. Dispositif d'entraînement selon la revendication 15, dans lequel les bobines sont placées côte à côte.

17. Dispositif d'entraînement selon les revendications 11 à 15, dans lequel les premiers moyens électromagnétiques comprennent un premier et un second jeu de bobines, et l'anneau possède un plan radial imaginaire, perpendiculaire à l'axe de rotation de l'anneau, qui divise l'anneau en deux moitiés, le premier jeu étant placé d'un côté du plan radial et le second jeu étant placé de l'autre côté du plan radial.

18. Véhicule comprenant un dispositif d'entraînement selon l'une quelconque des revendications précédentes, doté d'une roue comprenant un anneau qui est relié à un axe de roue et à des aimants permanents situés à l'intérieur de la roue, et dans lequel les moyens électromagnétiques sont reliés au véhicule.
